# EUROPÄISCHE PATENTSCHRIFT

(11) **EP 0 796 349 B1**
(45) Veröffentlichungstag und Bekanntmachung des Hinweises auf die Patenterteilung: **04.11.1998**
(21) Anmeldenummer: 95937714.4
(22) Anmeldetag: 28.11.1995
(51) Int. Cl.: C21B 13/14, C21B 13/00

(54) **VERFAHREN ZUM HERSTELLEN VON EISENSCHWAMM SOWIE ANLAGE ZUR DURCHFÜHRUNG DES VERFAHRENS**
SPONGE IRON PRODUCTION PROCESS AND PLANT
PROCEDE ET INSTALLATION DE PRODUCTION D'EPONGE DE FER

(30) Priorität: 01.12.1994 AT 2232/94
(43) Veröffentlichungstag der Anmeldung: 24.09.1997
(73) Patentinhaber: Voest-Alpine Industrieanlagenbau GmbH, 4020 Linz (AT)
(72) Erfinder: DIEHL, Jörg, 4040 Linz (AT); ROSENFELLNER, Gerald, 3352 St. Peter/Au (AT)
(74) Vertreter: Kopecky, Helmut, Dipl.-Ing. Kopecky & Schwarz Patentanwälte
(86) Internationale Anmeldenummer: AT9500232
(87) Internationale Veröffentlichungsnummer: WO9617089

(56) Entgegenhaltungen:
- EP-A- 0 487 856
- AT-A- 396 255
- GB-A- 799 551
- US-A- 1 800 856
- PATENT ABSTRACTS OF JAPAN vol. 2 no. 100 (C-020) ,18.August 1978 & JP,A,53 062718 (NIPPON STEEL CORP) 5.Juni 1978,
- PATENT ABSTRACTS OF JAPAN vol. 8 no. 222 (C-246) ,9.Oktober 1984 & JP,A,59 107009 (NITSUSHIN SEIKOU) 21.Juni 1984,
- PATENT ABSTRACTS OF JAPAN vol. 10 no. 280 (C-374) ,24.September 1986 & JP,A,61 099613 (NIPPON STEEL CORP) 17.Mai 1986,
- PATENT ABSTRACTS OF JAPAN vol. 940 no. 010 & JP,A,06 287001 (NIPPON SANSO KK) 11.Oktober 1994,

## Beschreibung

Die Erfindung betrifft ein Verfahren zum Herstellen von Eisenschwamm aus teilchenförmigem eisenoxidhältigem Material, wobei das eisenoxidhältige Material in einer Reduktionszone mit Reduktionsgas zu Eisenschwamm reduziert und das bei der Reduktion entstehende Gas als Topgas abgezogen und einer CO₂-Reinigung unterworfen wird unter Abscheidung von CO₂-hältigem Abgas, sowie eine Anlage zur Durchführung des Verfahrens.

Bei einem Verfahren dieser Art, beispielsweise bekannt aus der EP-B - 0 010 627, der DE-C-40 37 977 und der AT-B - 376.241, wird der durch die Direktreduktion gebildete Eisenschwamm in einer Einschmelzvergasungszone unter Zufuhr von stückigen Kohlenstoffträgern und sauerstoffhältigem Gas erschmolzen, wobei in der Einschmelzvergasungszone aus den stückigen Kohlenstoffträgern und durch Einblasen von sauerstoffhältigem Gas ein Fließbett gebildet wird, in dem die der Einschmelzvergasungszone von oben zugeführten Eisenschwammpartikel abgebremst und geschmolzen werden. Hierbei wird ein CO- und H₂-hältiges Reduktionsgas erzeugt, welches in die Reduktionszone eingeleitet und dort umgesetzt wird.

Bei dieser Umsetzung fällt eine große Menge an Topgas an, welches noch einen erheblichen Gehalt an Kohlenmonoxid und Wasserstoff aufweist. Wenn dieses Topgas wirtschaftlich genutzt werden kann, liegen die Erzeugungskosten für Eisenschwamm bzw. daraus erschmolzenes Roheisen oder daraus erzeugte Stahlvorprodukte sehr niedrig.

Es ist bekannt (DE-C - 40 37 977), das aus der Reduktionszone entweichende Topgas einer weiteren Reduktionszone zur Reduktion von zusätzlichem eisenoxidhältigem Material zuzuführen, u.zw. nachdem es einer Reinigung unterworfen wurde. Die Aufbereitung des Topgases erfolgt im allgemeinen derart, daß es zunächst in einem Wäscher von Feststoffteilchen gereinigt wird, wobei es stark abgekühlt wird. Danach wird das im Topgas enthaltene CO₂ entfernt, da es einer weiteren Verwendung des Topgases als Reduktionsgas hinderlich ist. Zur Reinigung des Topgases von CO₂ sind verschiedene Verfahren bekannt, beispielsweise das Pressure-Swing-Verfahren oder eine chemische CO₂-Wäsche. Das CO₂-reiche Abgas, welches bei der CO₂-Reinigung abgeschieden wird, wird in der DE-C nicht näher beschriebener Weise weiterverwendet.

Gemäß der DE-C - 40 37 977 gelingt eine weitgehende Ausnutzung der im Topgas chemisch gebundenen Energie. Ein Problem stellt jedoch das bei der Topgas-Reinigung anfallende CO₂-hältige Abgas dar, das umweltgerecht entsorgt werden muß.

Dieses Abgas enthält u.a. CO, H₂, CH₄ sowie H₂S und kann daher aus Umweltschutzgründen in diesem Zustand nicht an die Umgebung abgegeben werden. Aus diesem Grund ist es auch für eine etwaige Weiterverarbeitung nur bedingt geeignet. Daher werden üblicherweise die Schwefelverbindungen aus dem Abgas entfernt. Diese Entschwefelung wird bisher mit Hilfe verschiedener Verfahren, wie beispielsweise mit der sogenannten "Stretford-Wäsche" oder durch katalytische Oxidation an Aktivkohle etc., durchgeführt. Aus der DE-B - 37 16 511 ist es bekannt, H₂S aus dem CO₂-hältigen Abgas in einem Entschwefelungsreaktor mit Hilfe von Eisenschwamm zu entfernen. Sämtliche dieser Verfahren sind aufwendig und benötigen zusätzliche Materialien, wie Aktivkohle oder Absorptionsmittel, die u.a. gesondert gelagert und entsorgt werden müssen.

Es ist intern bekannt, das CO₂-hältige Abgas abzufackeln. Dieses Abfackeln erfordert jedoch das Bereitstellen von brennbarem Stützgas als Zünd- und Aufkarborierungsgas, da der Heizwert des CO₂-hältigen Abgases nur gering ist.

Aus der EP-A - 0 571 358 ist es bekannt, bei der Direktreduktion von Feinerz mit Hilfe eines aus reformiertem Erdgas gebildeten Reduktionsgases anfallendes Topgas einer CO₂-Wäsche zu unterziehen und das so gereinigte Topgas frischem, aus Erdgas durch Reformieren gewonnenem Reduktionsgas beizumengen und dieses Gasgemisch in die Reduktionszone einzuleiten. Auch hierbei tritt das Problem der Entsorgung des bei der Topgas-Reinigung anfallenden CO₂-hältigen Abgases auf, wenn auch dieses Abgas aufgrund der Herstellung des Reduktionsgases aus reformiertem Erdgas einen geringeren H₂S-Gehalt aufweist als das Abgas, das bei der Topgas-Reinigung von aus stückigen Kohlenstoffträgern gewonnenem Reduktionsgas anfällt.

Die Erfindung bezweckt die Verrneidung dieser Nachteile und Schwierigkeiten und stellt sich die Aufgabe, eine effiziente Verwertungsmöglichkeit des bei der Erz-Reduktion, wie einer Direktreduktion zur Eisenschwammherstellung, anfallenden Topgases unter Umgehung der damit beim Stand der Technik verbundenen Schwierigkeiten zu schaffen. Insbesondere soll CO₂-hältiges Abgas nicht nur umweltgerecht verarbeitet und so entsorgt, sondern so weit wie möglich auch energetisch genutzt werden. Weiters sollen Probleme, die mit der bei der CO₂-Abscheidung gleichzeitig stattfindenden H₂S-Abscheidung zusammenhängen, ebenfalls umweltgerecht gelöst werden.

Diese Aufgabe wird erfindungsgemäß bei einem Verfahren der eingangs beschriebenen Art dadurch gelöst.
- daß das bei der CO₂-Reinigung abgeschiedene CO₂-hältige Abgas mit einem sauerstoffhältigen Gas vermischt und zumindest zum Teil unter indirekter Wärmeabgabe an Reduktionsgas verbrannt wird.

Erfindungsgemäß gelingt es, den Wärmeinhalt des CO₂-hältigen Abgases, auch wenn sein Energiegehalt nicht sehr hoch ist, vollständig zu nutzen, ohne hierdurch die Umwelt zu belasten.

Vorzugsweise wird mit dem aufgeheizten Reduktionsgas teilchenförmiges eisenoxidhältiges Material reduziert.

Ein besonderer Vorteil der Erfindung ist darin zu sehen, daß das aus dem Topgas eines Reduktionsprozesses abgeschiedene CO₂-hältige Abgas zumindest großteils wiederum einem Reduktionsprozeß energetisch zugute kommt, wobei dieser Reduktionsprozeß ein zu dem das Topgas bildenden Reduktionsprozeß zusätzlicher Reduktionsprozeß sein kann oder mit demselben identisch ist, d.h. daß zumindest ein Teil des von CO₂ gereinigten Topgases wiederum als Reduktionsgas oder Beimengung zum Reduktionsgas dem Reduktionsprozeß zugeführt wird, bei dem es als Topgas angefallen ist (beispielsweise bekannt aus der DE-B-37 16 511).

Gemäß einer bevorzugten Ausführungsform wird das bei der CO₂-Reinigung abgeschiedene CO₂-hältige Abgas zusätzlich mit einem brennbaren Gas vermischt.

Vorzugsweise wird als brennbares Gas zumindest ein Teil eines bei einer Reduktion, wie einer Direktreduktion, von teilchenförmigem eisenoxidhältigem Material mit Reduktionsgas entstehenden Topgases eingesetzt. Hierdurch gelingt es, die Aufheizung des Reduktionsgases auf Reduktionstemperatur ohne Einsatz von Fremdgas (bis auf Zuführung eines O₂-hältigen Gases, wie Luft) sicherzustellen.

Vorzugsweise wird das einer CO₂-Reinigung unterworfene Topgas in einer ersten Reduktionszone gebildet und wird das von CO₂-gereinigte Topgas als Reduktionsgas nach Aufheizung in mindestens einer weiteren Reduktionszone zur Reduktion von weiterem teilchenförmigen eisenoxidhältigen Material eingesetzt und dort umgesetzt. Durch diese Maßnahmen ist es möglich, das in einer Einschmelzvergasungszone aus stückigen Kohlenstoffträgern in großer Menge gebildete Reduktionsgas nach Umsetzung in der Reduktionszone, nach der es noch einen erheblichen Gehalt an Kohlenmonoxid und Wasserstoff aufweist, optimal zur Erzeugung von möglichst großen Mengen Eisenschwamm zu nutzen.

Hierbei wird zweckmäßig in der zweiten Reduktionszone gebildetes Topgas zumindest teilweise als brennbares Gas mit bei der CO₂-Reinigung abgeschiedenem CO₂-hältigen Abgas vermischt und unter indirekter Wärmeabgabe an das der zweiten Reduktionszone zugeführte Reduktionsgas verbrannt.

Vorteilhaft wird die CO₂-Verminderung bzw. -Entfernung durch Druckwechsel-Adsorption durchgeführt. Dieses Verfahren ist insbesondere von Vorteil, wenn das Topgas nur mit geringem Druck anfällt, da bei niedrigem Druck der Dampfverbrauch für eine chemische Wäsche enorm ansteigt. Bei der Herstellung des Reduktionsgases aus reformiertem Erdgas empfiehlt sich eher für die CO₂-Entfernung eine chemische Wäsche.

Bevorzugt wird in der ersten Reduktionszone gebildeter Eisenschwamm in einer Einschmelzvergasungszone unter Zufuhr von festen Kohlenstoffträgern und sauerstoffhältigem Gas erschmolzen, wobei ein CO- und H₂-hältiges Reduktionsgas gebildet wird, das in die erste Reduktionszone eingeleitet und dort umgesetzt wird.

Bei einer Anlage zur Durchführung des Verfahren mit einem Reduktions-Schachtofen für teilchenförmiges eisenoxidhältiges Material, der eine Zuleitung für ein Reduktionsgas sowie eine Topgas-Ableitung aufweist, mündet die Topgas-Ableitung in eine CO₂-Reinigungseinrichtung, von der eine das CO₂-gereinigte Topgas zu einem Reduktions-Schachtofen über eine Heizeinrichtung für das CO₂-gereinigte Topgas führende Reduktionsgas-Zuleitung sowie eine abgeschiedenes CO₂-hältiges Abgas führende Abgasleitung ausgehen. Die Anlage ist dadurch gekennzeichnet, daß in die Abgasleitung, welche zu einer Heizeinrichtung führt, eine ein sauerstoffhältiges Gas zur Heizeinrichtung leitende Leitung mündet, wobei die Heizeinrichtung als indirekte Heizeinrichtung zur Aufheizung von CO₂-gereinigtem Topgas ausgebildet ist und die dieses Topgas führende Reduktionsgas-Zuleitung in die Heizeinrichtung mündet.

Hierbei wird vorteilhaft die im CO₂-hältigen Abgas enthaltene Energie für den ReduktionsProzeß ausgenützt.

Eine bevorzugte Ausführungsform ist dadurch gekennzeichnet, daß von der CO₂-Reinigungseinrichtung eine abgeschiedenes CO₂-hältiges Abgas zumindest teilweise zu einer Heizeinrichtung führende Abgasleitung ausgeht, in die eine ein brennbares Gas zur Heizeinrichtung leitende Brenngasleitung mündet.

Um ohne Fremdgas eine Verbrennung des CO₂-hältigen Abgases zu ermöglichen, geht zweckmäßig die Brenngasleitung von einem Reduktions-Schachtofen aus und nimmt das in dem Reduktions-Schachtofen anfallende Topgas zumindest teilweise auf.

Gemäß einer bevorzugten Ausführungsform sind zwei Reduktions-Schachtöfen vorgesehen, die miteinander über die Topgas-Ableitung des ersten Reduktions-Schachtofens, über die CO₂-Reinigungseinrichtung und die von dieser ausgehenden, über die Heizeinrichtung führende Reduktionsgaszuleitung leitungsmäßig miteinander verbunden sind.

Hierbei geht zweckmäßig die Brenngasleitung vom zweiten Reduktions-Schachtofen aus.

Eine bevorzugte Ausführungsform ist gekennzeichnet durch einen Einschmelzvergaser, in den eine den Eisenschwamm aus dem ersten Reduktions-Schachtofen führende Förderleitung mündet, und der Zuleitungen für sauerstofftältige Gase und für feste Kohlenstoffträger sowie Abstiche für Roheisen und Schlacke aufweist und von dem eine in den ersten Reduktions-Schachtofen mündende Zuleitung für im Einschmelzvergaser gebildetes Reduktionsgas ausgeht.

Vorzugsweise ist die Gasreinigungseinrichtung als Druckwechsel-Adsorptionsanlage ausgebildet.

Zweckmäßig mündet eine abgeschiedenes CO₂-hältiges Abgas ableitende Abgasleitung in eine als Dampferzeuger ausgebildete Heizeinrichtung.

Vorzugsweise mündet eine abgeschiedenes CO₂-hältiges Abgas ableitende Abgasleitung in eine Heizeinrichtung, deren Rauchgase über eine einen Wärmetauscher aufweisende Rauchgas-Ableitung ableitbar sind, wobei aufzuheizendes Material, wie Kohle, Erz, etc., in dem Wärmetauscher in direkten Kontakt mit den Rauchgas bringbar ist.

Eine weitere bevorzugte Ausführungsform ist dadurch gekennzeichnet, daß eine abgeschiedenes CO₂-hältiges Abgas ableitende Abgasleitung über einen in der Topgas-Ableitung eines Reduktions-Schachtofens vorgesehenen Wärmetauscher geführt ist und anschließend in eine Heizeinrichtung mündet.

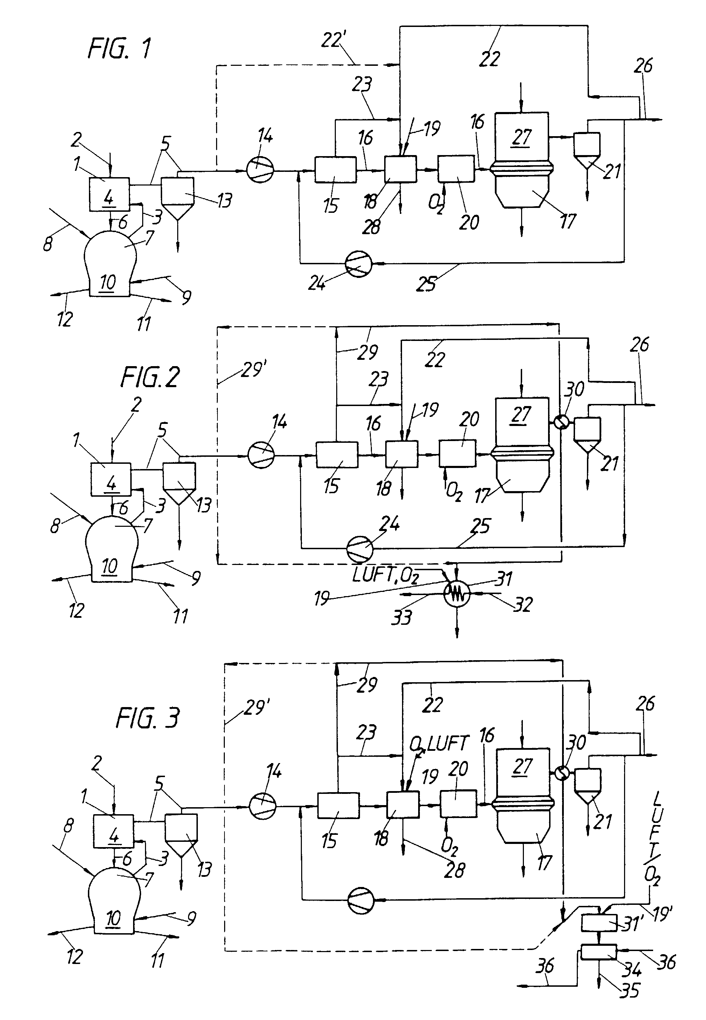

Die Erfindung ist nachfolgend anhand mehrerer in den Fig. 1 bis 3 der Zeichnung jeweils in Blockschema dargestellter Verfahren näher erläutert.

In einen ersten Reduktions-Schachtofen 1 werden gemäß den Fig. 1 bis 3 in bekannter Weise über eine Leitung 2 teilchenförmiges eisenoxidhältiges Material, vorzugsweise stückiges Eisenerz, und etwaige Zuschläge zugeführt. Über eine Zuleitung 3 wird Reduktionsgas in den Reduktions-Schachtofen eingeblasen, das entgegen dem Strom des nach unten sinkenden Eisenerzes nach oben aufsteigt und die Reduktion des Einsatzes in der Reduktionszone 4 bewirkt. Nach Durchströmen des Schachtofens 1 wird dieses Gas als Topgas über eine Topgas-Ableitung 5 abgeführt.

Über vorzugsweise als Fallrohre 6 ausgebildete Förderleitungen gelangt der reduzierte Möller, der Eisen in Form von Eisenschwamm enthält, in einen Einschmelzvergaser 7. Dem Einschmelzvergaser 7 wird in bekannter Weise über eine Leitung 8 ein stückiger Kohlenstoffträger beispielsweise in Form von Braunkohlen-Hochtemperaturkoks sowie gegebenenfalls als Kohle und weiters über eine Leitung 9 ein sauerstoffhältiges Gas zugeführt.

Der Möller bzw. Eisenschwamm fällt hierbei von oben in der Einschmelzvergasungszone 10 auf ein aus den stückigen Kohlenstoffträgern gebildetes Fließbett bzw. Wirbelbett, das durch das eingeblasene sauerstoffhältige Gas aufrechterhalten wird. Durch die Verbrennung des Kokses sowie gegebenenfalls der Kohle unter der Einwirkung des sauerstoffhältigen Gases wird im Fließbett bzw. Wirbelbett so viel Wärme erzeugt, daß der Eisenschwamm schmilzt. Im geschmolzenen Zustand wird er durch den Kohlenstoff fertig reduziert so daß sich am Boden des Einschmelzvergasers 7 eine Roheisenschmelze ansammelt. Über der Roheisenschmelze bildet sich eine Schlackenschmelze aus. Diese beiden Schmelzen werden in vorgegebenen Zeitabständen über entsprechend angeordnete Abstiche 11, 12 abgezogen.

Bei der Verbrennung des Kokses und gegebenenfalls der Kohle im Einschmelzvergaser wird ein im wesentlichen aus CO und H₂ bestehendes Reduktionsgas erzeugt, das über die Zuleitung 3 aus dem Einschmelzvergaser 7 abgezogen und dem Reduktions-Schachtofen 1 zugeführt wird. Eine Reinigung und Abkühlung des im Einschmelzvergaser gebildeten Reduktionsgases auf die für die Reduktion erforderliche Temperatur erfolgt in an sich bekannter Weise, was in der Zeichnung jedoch nicht näher dargestellt ist.

Das über die Topgas-Ableitung 5 abgezogene Topgas wird zunächst einer Reinigung, beispielsweise in einem Zyklon 13 oder einem Wäscher, unterzogen, um es von Staubpartikeln zu befreien. Anschließend gelangt das Topgas mit Hilfe eines Verdichters 14 in eine CO₂-Reinigungseinrichtung 15, in der es von CO₂ und gleichzeitig von H₂S befreit wird. Die Reinigungseinrichtung 15 ist als Druckwechsel-Adsorptionsanlage ausgebildet. In diesem Fall wird auch H₂O entfernt. Das so gereinigte Topgas wird über eine Reduktionsgas-Zuleitung 16 einem zweiten Reduktions-Schachtofen 17, der wie der erste Reduktions-Schachtofen 1 ebenfalls im Gegenstromprinzip arbeitet, zugeführt. In diesem Schachtofen 17 wird teilchenförmiges Erz direktreduziert.

Da das Topgas durch die Reinigung eine starke Abkühlung erfahren hat, wird es vor Einleitung in den zweiten Reduktions-Schachtofen 17 einer Aufheizung unterzogen. Die Aufheizung erfolgt in zwei Stufen: Zunächst wird das gereinigte Topgas in einer ersten Stufe einer indirekten Aufheizung unterzogen, wobei die hierzu dienende Heizeinrichtung 18 als Wärmetauscher ausgebildet ist. Der Wärmetauscher (Rekuperator) 18 wird mit einer Mischung aus von in der CO₂-Reinigungseinrichtung 15 abgeschiedenem CO₂-hältigem Abgas und gereinigtem Topgas, das aus dem zweiten Reduktions-Schachtofen 17 abgezogen wird, betrieben. Zusätzlich wird noch über eine Leitung 19 sauerstoffhältiges Gas (Sauerstoff liegt in Molekülform vor), wie Luft, dem Brenner des Wärrnetauschers 18 zugeführt. Anschließend wird das aufgeheizte gereinigte Topgas einer Nachverbrennung unterzogen, u.zw. in der Nachverbrennungseinrichtung 20, in der ein Teil des gereinigten Topgases unter Sauerstoffzuführung verbrannt wird. Hierdurch erreicht das gereinigte Topgas die für die Reduktion im zweiten Reduktions-Schachtofen erforderliche Temperatur, die in einem Temperaturbereich zwischen 700 und 900°C liegt.

Das aus dem Reduktions-Schachtofen 17 abgezogene Topgas wird ebenfalls einer Reinigung und Kühlung (Topgasscrubber 21) unterzogen, um es von Staubpartikeln zu säubern und den Wasserdampfgehalt zu erniedrigen. Anschließend wird ein Teil des gereinigten Topgases über die Brenngas-Leitung 22 dem Wärmetauscher 18 zugeführt, wobei diese Brenngasleitung mit der das CO₂-hältige Abgas aus der CO₂-Reinigungseinrichtung ableitenden Abgasleitung 23 zusammenmündet. Der weitere Teil des im zweiten Reduktions-Schachtofen 17 anfallenden Topgases wird über einen Verdichter 24 ebenfalls der CO₂-Reinigungseinrichtung, 15 über die Förderleitung 25, die in die Topgas-Ableitung 5 mündet, zugeführt und steht dann ebenfalls der CO₂-Entfernungseinrichtung 15 und anschließend als Recycle-Reduktionsgas zur Verfügung. Der für das erfindungsgemäße Verfahren nicht benötigte Teil des Topgases des Reduktions-Schachtofens 17 wird als Exportgas über die Exportgasleitung 26 anderen Verwendungszwecken zugeführt. In diese Exportgasleitung 26 kann auch eine von der Abgasleitung 23 abzweigende Zweigleitung, mit der ein Teil des CO₂-hältigen Abgases - soferne es nicht im Wärmetauscher 18 benötigt wird - dem Exportgas zugemischt wird, münden.

Ein wesentlicher Vorteil der Erfindung ist darin zu sehen, daß das aus dem CO₂-hältigen Abgas und dem Topgas des zweiten Reduktions-Schachtofens 17 gemischte Brenngas eine niedrige adiabatische Verbrennungstemperatur aufweist. Die Rauchgastemperatur vor den Wärmetauscherbündeln des Wärmetauschers 18 wird durch das Volumsverhältnis CO₂-hältiges Abgas/Topgas und/oder sauerstoffhältiges Gas eingestellt. Eine Rauchgasrückführung, wie sie zur Temperatureinstellung erforderlich wäre, wenn lediglich Topgas als Brennstoff für den Wärmetauscher 18 eingesetzt wird, kann entfallen. Das im Wärmetauscher 18 gebildete Rauchgas wird über die Rauchgas-Ableitung 28 in üblicher Weise gereinigt abgeleitet. Falls nicht die gesamte Energie des CO₂-hältigen Abgases bzw. der Mischung dieses Abgases mit Topgas zur Aufheizung des Reduktionsgases benötigt wird, ist es zweckmäßig, den nicht benötigten Teil des Abgases bzw. der Mischung aus Abgas und Topgas dem Exportgas zuzumischen.

Das der Heizeinrichtung 18 zugeführte Brenngas kann auch aus CO₂-hältigem Abgas und einem Heizgas, wie Erdgas etc., oder aus CO₂-hältigem Abgas und aus der ersten Reduktionszone 4 stammendem Topgas, das dann über die in Fig. 1 strichliert dargestellte Leitung 22' zugeführt wird, gebildet werden.

Durch den Einsatz des CO₂-hältigen Abgases im Wärmetauscher 18 wird der Energiegehalt dieses Abgases noch genützt. Das CO₂-hältige Abgas ersetzt somit einen Teil des Topgases und dieser Teil kann für andere Zwecke eingesetzt werden. Ein Vorteil ist weiters noch darin zu sehen, daß für das durch die Verbrennung des CO₂-hältigen Abgases gebildete SO₂ höhere Grenzwerte zugelassen sind als für das im unverbrannten CO₂-hältigen Abgas vorhandene H₂S. Diese Verwendung des CO₂-hältigen Abgases ist daher ohne schädliche Belastung der Umwelt verwirklichbar. Falls der SO₂-Gehalt noch zu hoch ist, empfiehlt sich eine Rauchgasentschwefelung nach dem Stand der Technik. Die Komponenten CO, H₂ und CH₄ sind jedoch soweit vollständig umgewandelt, daß ein eventueller Restgehalt weit unter den zulässigen Grenzwerten liegt.

Gemäß dem anhand der nachstehenden Tabellen 1 bis 4 näher erläuterten Ausführungsbeispiel wird das bei der CO₂-Reinigung anfallende CO₂-hältige Abgas mit aus der zweiten Reduktionszone 27 stammendem Topgas gemischt.

In nachstehender Tabelle 1 ist die chemische Zusammensetzung des CO₂-hältigen Abgases, das bei der CO₂-Reinigung des in der ersten Reduktionszone 4 anfallenden Topgases gebildet wird, wiedergegeben.

**Tabelle 1**

| | |
|---|---|
| CO | 11,8 Vol.% |
| CO₂ | 80,3 Vol.% |
| H₂ | 1,5 Vol.% |
| H₂O | 5,3 Vol.% |
| N₂ | 0,7 Vol.% |
| CH₄ | 0,4 Vol.% |
| H₂S max. | 0,03 Vol.% |
| kJ/Nm³ | 1.795 |

Tabelle 2 beinhaltet die chemische Zusammensetzung des aus der zweiten Reduktionszone 27 des zweiten Reduktions-Schachtofens 17 stammenden gereinigten und gekühlten Topgases, bevor es mit dem CO₂-hältigen Abgas vermischt wird.

**Tabelle 2**

| | |
|---|---|
| CO | 43,2 Vol.% |
| CO₂ | 25,4 Vol.% |
| H₂ | 18,0 Vol.% |
| H₂O | 5,7 Vol.% |
| N₂ | 6,2 Vol.% |
| CH₄ | 1,5 Vol.% |
| H₂S max. | 0,00 Vol.% |
| kJ/Nm³ | 7.945 |

Tabelle 3 gibt die chemische Zusammensetzung der Mischung aus Topgas und aus CO₂-hältigem Abgas wieder, die im Wärmetauscher 18 verbrannt wird.

**Tabelle 3**

| | |
|---|---|
| CO | 16,6 Vol.% |
| CO₂ | 72,0 Vol.% |
| H₂ | 4,0 Vol.% |
| H₂O | 5,3 Vol.% |
| N₂ | 1,5 Vol.% |
| CH₄ | 0,6 Vol.% |
| H₂S max. | 0,02 Vol.% |
| kJ/Nm³ | 2.725 |

Die chemische Zusammensetzung des bei der Verbrennung dieses Mischgases im Wärmetauscher 18 gebildeten Rauchgases ist in nachstehender Tabelle 4 wiedergegeben.

**Tabelle 4**

| | |
|---|---|
| CO₂ | 60,1 Vol.% |
| H₂O | 7,9 Vol.% |
| O₂ | 0,4 Vol.% |
| N₂ | 31,6 Vol.% |
| SO₂ | 0,02 Vol.% |

Die adiabatische Verbrennungstemperatur liegt bei 984°C.

In den nachstehenden Tabellen 5 und 6 ist ein Ausführungsbeispiel wiedergegeben, gemäß dem das bei der CO₂-Reinigung des in der ersten Reduktionszone 4 anfallenden Topgases gebildete CO₂-hältige Abgas (Tabelle 5) lediglich mit Sauerstoff gemischt und verbrannt wird. Da in diesem Fall das dem Wärmetauscher 18 zugeführte Gas lediglich aus CO₂-hältigem Abgas und Sauerstoff (oder einem sauerstoffhältigen Gas) besteht kann es erforderlich sein, Zündbrenner (sogenannte Pilot-Brenner) des Wärmetauschers 18 separat mit Topgas, Erdgas oder einem sonstigen Brenngas, zu versorgen, was jedoch wegen der hierfür erforderlichen geringen Mengen nicht ins Gewicht fällt. Dies - und auch der Heizwert des Mischgases für den Wärmetauscher 18 - hängt u.a. von der Fahrweise der CO₂-Reinigungsanlage ab, d.h. von der Menge der Reduktanten, die vermehrt anfallen, wenn in der CO₂-Reinigungsanlage keine allzu scharfe Abtrennung des CO₂ durchgeführt wird.

**Tabelle 5**

| | |
|---|---|
| CO | 11,8 Vol.% |
| CO₂ | 80,3 Vol.% |
| H₂ | 1,5 Vol.% |
| H₂O | 5,3 Vol.% |
| N₂ | 0,7 Vol.% |
| CH₄ | 0,4 Vol.% |
| H₂S max. | 0,03 Vol.% |
| kJ/Nm³ | 1.795 |

Die chemische Zusammensetzung des Rauchgases ist in Tabelle 6 angegeben.

**Tabelle 6**

| | |
|---|---|
| CO₂ | 91.2 Vol.% |
| H₂O | 7,6 Vol.% |
| O₂ | 0,4 Vol.% |
| N₂ | 0,7 Vol.% |
| SO₂ | 0,03 Vol.% |

Die adiabatische Verbrennungstemperatur liegt bei 867°C.

Gemäß der in Fig. 2 dargestellten Verfahrensvariante wird ein Teil des CO₂-hältigen Abgases über eine von der Abgasleitung 23 abzweigende Abgasleitung 29 über einen Wärmetauscher 30, in dem das CO₂-hältige Abgas mit Hilfe des den zweiten Reduktions-Schachtofen 17 verlassenden Topgases erwärmt wird, zu einer Heizeinrichtung 31 geführt, in der es unter Zufuhr von Sauerstoff eines sauerstoffhältigen Gases bzw. Luft als Sauerstoffträgergas verbrannt wird. In dieser Heizeinrichtung 31 kann beispielsweise Dampf rekuperativ erzeugt werden: die Wasserzuführung ist mit 32 und die Dampfableitung mit 33 bezeichnet. Über die strichliert in Fig. 2 dargestellte Abgas leitung 29' kann ein Teil des CO₂-hältigen Abgases - oder auch die Gesamtmenge dieses Abgases - direkt ohne Umweg über den Wärmetauscher 30 der Heizeinrichtung 31 zugeführt werden.

Gemäß Fig. 3 wird das CO₂-hältige Abgas in der Heizeinrichtung 31 verbrannt, und es wird mit Hilfe des dabei entstehenden Abgases in einer Vorwärmkammer 34 Kohle oder Erz, das über Fördereinrichtungen 36 zu- und abgefördert wird, direkt erwärmt. Das abgekühlte Rauchgas wird über die Rauchgas-Ableitung 35 abgeleitet.

Wie aus den Fig. 2 und 3 zu erkennen ist, kann die dem CO₂-hältigen Abgas innewohnende Energie unterschiedlich genützt werden, wobei auch mehrere Nutzungsarten miteinander kombiniert werden können, so daß die Energieausnützung je nach Betriebsweise der Reduktions-Schachtöfen 1 und 17 und je nach Verwendung des über die Leitung 26 Verbrauchern zugeführten Exportgases optimal verwirklicht werden kann. Z.B. kann auf eine Erwärmung des über die Reduktionsgas-Zuleitung 16 dem Reduktions-Schachtofen 17 zugeleiteten Reduktionsgases auch verzichtet werden, falls allein mit einer Nachverbrennung die erforderliche Reduktionsgastemperatur erzielt werden kann.

## Patentansprüche

1. Verfahren zum Herstellen von Eisenschwamm aus teilchenförmigem eisenoxidhältigem Material, wobei das eisenoxidhältige Material in einer Reduktionszone (4) mit Reduktionsgas zu Eisenschwamm reduziert und das bei der Reduktion entstehende Gas als Topgas abgezogen und einer CO₂-Reinigung unterworfen wird unter Abscheidung von CO₂-hältigem Abgas, dadurch gekennzeichnet, daß das Abgas mit einem sauerstoffhältigen Gas vermischt und zumindest zum Teil unter indirekter Wärmeabgabe an Reduktionsgas verbrannt wird.

2. Verfahren nach Anspruch 1, dadurch gekennzeichnet, daß mit dem aufgeheizten Reduktionsgas teilchenförmiges eisenoxidhältiges Material reduziert wird.

3. Verfahren nach Anspruch 1 oder 2, dadurch gekennzeichnet, daß das bei der CO₂-Reinigung abgeschiedene CO₂-hältige Abgas zusätzlich mit einem brennbaren Gas vermischt wird.

4. Verfahren nach einem oder mehreren der Ansprüche 1 bis 3, dadurch gekennzeichnet, daß als brennbares Gas zumindest ein Teil eines bei einer Reduktion, wie einer Direktreduktion, von teilchenförmigem eisenoxidhältigem Material mit Reduktionsgas entstehenden Topgases eingesetzt wird.

5. Verfahren nach einem oder mehreren der Ansprüche 2 bis 4, dadurch gekennzeichnet, daß das einer CO₂-Reinigung unterworfene Topgas in einer ersten Reduktionszone (4) gebildet wird und das von CO₂-gereinigte Topgas als Reduktionsgas nach Aufheizung in mindestens einer weiteren Reduktionszone (27) zur Reduktion von weiterem teilchenförmigem eisenoxidhältigem Material eingesetzt und dort umgesetzt wird.

6. Verfahren nach Anspruch 5, dadurch gekennzeichnet, daß in der zweiten Reduktionszone (27) gebildetes Topgas zumindest teilweise als brennbares Gas mit bei der CO₂-Reinigung abgeschiedenem CO₂-hältigem Abgas vermischt und unter indirekter Wärmeabgabe an das der zweiten Reduktionszone (27) zugeführte Reduktionsgas verbrannt wird.

7. Verfahren nach einem oder mehreren der Ansprüche 1 bis 6, dadurch gekennzeichnet, daß die CO₂-Reinigung des Topgases durch Druckwechsel-Adsorption durchgeführt wird.

8. Verfahren nach einem oder mehreren der Ansprüche 5 bis 7, dadurch gekennzeichnet, daß in der ersten Reduktionszone (4) gebildeter Eisenschwamm in einer Einschmelzvergasungszone (10) unter Zufuhr von festen Kohlenstoffträgern und sauerstoffhältigem Gas erschmolzen wird, wobei ein CO- und H₂-hältiges Reduktionsgas gebildet wird, das in die erste Reduktionszone (4) eingeleitet und dort umgesetzt wird.

9. Anlage zur Durchführung des Verfahrens nach einem oder mehreren der Ansprüche 1 bis 7, mit einem Reduktions-Schachtofen (1) für teilchenförmiges eisenoxidhältiges Material, der eine Zuleitung (3) für ein Reduktionsgas sowie eine Topgas-Ableitung (5) aufweist, wobei die Topgas-Ableitung (5) in eine CO₂-Reinigungseinrichtung (15) mündet, von der eine das CO₂-gereinigte Topgas zu einem Reduktions-Schachtofen (17) über eine Heizeinrichtung (18, 20) für das CO₂-gereinigte Topgas führende Reduktionsgas-Zuleitung (16) sowie eine abgeschiedenes CO₂-hältiges Abgas führende Abgasleitung (23, 29, 29') ausgehen, dadurch gekennzeichnet, daß in die Abgasleitung (23, 29, 29'), welche zu einer Heizeinrichtung (18, 31) führt, eine ein sauerstoffhältiges Gas zur Heizeinrichtung (18, 31) leitende Leitung (19, 19') mündet, wobei die Heizeinrichtung (18) als indirekte Heizeinrichtung (18) zur Aufheizung von CO₂-gereinigtem Topgas ausgebildet ist und die dieses Topgas führende Reduktionsgas-Zuleitung (16) in die Heizeinrichtung (18) mündet.

10. Anlage nach Anspruch 9, dadurch gekennzeichnet, daß von der CO₂-Reinigungseinrichtung (15) eine abgeschiedenes CO₂-hältiges Abgas zumindest teilweise zu einer Heizeinrichtung (18) führende Abgasleitung (23) ausgeht, in die eine ein brennbares Gas zur Heizeinrichtung (18) leitende Brenngasleitung (22) mündet.

11. Anlage nach Anspruch 10, dadurch gekennzeichnet, daß die Brenngasleitung (22) von einem Reduktions-Schachtofen (17) ausgeht und das in dem Reduktions-Schachtofen (17) anfallende Topgas zumindet teilweise aufnimmt.

12. Anlage nach einem oder mehreren der Ansprüche 9 bis 11, dadurch gekennzeichnet, daß zwei Reduktions-Schachtöfen (1, 17) vorgesehen sind, die miteinander über die Topgas-Ableitung (5) des ersten Reduktions-Schachtofens (1), über die CO₂-Reinigungseinrichtung (15) und die von dieser ausgehenden, über die Heizeinrichtung (18) führende Reduktionsgaszuleitung (16) leitungsmäßig miteinander verbunden sind.

13. Anlage nach Anspruch 12, dadurch gekennzeichnet, daß die Brenngasleitung (22) vom zweiten Reduktions-Schachtofen (17) ausgeht.

14. Anlage nach Anspruch 13, gekennzeichnet durch einen Einschmelzvergaser (7), in den eine den Eisenschwamm aus dem ersten Reduktions-Schachtofen führende Förderleitung (6) mündet, und der Zuleitungen (8, 9) für sauerstoffhältige Gase und für feste Kohlenstoffträger sowie Abstiche (11, 12) für Roheisen und Schlacke aufweist und von dem eine in den ersten Reduktions-Schachtofen (4) mündende Zuleitung (3) für im Einschmelzvergaser (7) gebildetes Reduktionsgas ausgeht.

15. Anlage nach einem oder mehreren der Ansprüche 9 bis 14, dadurch gekennzeichnet, daß die Gasreinigungseinrichtung (15) als Druckwechsel-Absorptionsanlage ausgebildet ist.

16. Anlage nach einem oder mehreren der Ansprüche 9 bis 15, dadurch gekennzeichnet, daß eine abgeschiedenes CO₂-hältiges Abgas ableitende Abgasleitung (29, 29') in eine als Dampferzeuger ausgebildete Heizeinrichtung (31) mündet (Fig. 2).

17. Anlage nach einem oder mehreren der Ansprüche 9 bis 16, dadurch gekennzeichnet, daß eine abgeschiedenes CO₂-hältiges Abgas ableitende Abgasleitung (29, 29') in eine Heizeinrichtung (31') mündet, deren Rauchgase über eine einen Wärmetauscher (34) aufweisende Rauchgas-Ableitung (35) ableitbar sind, wobei aufzuheizendes Material, wie Kohle, Erz, etc., in dem Wärmetauscher (34) in direkten Kontakt mit den Rauchgas bringbar ist (Fig. 3).

18. Anlage nach einem oder mehreren der Ansprüche 9 bis 17, dadurch gekennzeichnet, daß eine abgeschiedenes CO₂-hältiges Abgas ableitende Abgasleitung (29) über einen in der Topgas-Ableitung eines Reduktions-Schachtofens (17) vorgesehenen Wärmetauscher (30) geführt ist und anschließend in eine Heizeinrichtung (31) mündet (Fig. 2, 3).

## Claims

1. A process for producing sponge iron from particulate iron-oxide-containing material, wherein the iron-oxide-containing material in a reduction zone (4) is reduced to sponge iron by means of reducing gas and the gas forming during reduction is withdrawn as top gas and subjected to CO₂ purification, under separation of CO₂-containing offgas, characterized in that the offgas is mixed with an oxygen-containing gas and is burnt at least partially while indirectly giving off heat to reducing gas.

2. A process according to claim 1, characterized in that particulate iron-oxide-containing material is reduced by means of the heated reducing gas.

3. A process according to claim 1 or 2, characterized in that the CO₂-containing offgas separated in CO₂ purification additionally is mixed with a combustible gas.

4. A process according to one or several of claims 1 to 3, characterized in that at least a portion of the top gas forming in a reduction, such as a direct reduction, of particulate iron-oxide-containing material by means of reducing gas is employed as a combustible gas.

5. A process according to one or several of claims 2 to 4, characterized in that the top gas subjected to CO₂ purification is formed in a first reduction zone (4) and the top gas purified from CO₂, after heating, is used as a reducing gas in at least one further reduction zone (27) for reducing further particulate iron-oxide-containing material, being reacted there.

6. A process according to claim 5, characterized in that top gas formed in the second reduction zone (27) at least partially is admixed as a combustible gas to CO₂-containing offgas separated in CO₂ purification and is burnt while indirectly giving off heat to the reducing gas fed to the second reduction zone (27).

7. A process according to one or several of claims 1 to 6, characterized in that CO₂ purification of the top gas is effected by pressure swing adsorption.

8. A process according to one or several of claims 5 to 7, characterized in that sponge iron formed in the first reduction zone (4) is smelted in a meltdown gasifying zone (10) while supplying solid carbon carriers and oxygen-containing gas, thus forming a CO- and H₂-containing reducing gas to be injected into the first reduction zone (4) and reacted there.

9. A plant for carrying out the process according to one or several of claims 1 to 7, comprising a reduction shaft furnace (1) for particulate iron-oxide containing material including a supply duct (3) for reducing gas as well as a discharge duct (5) for top gas, wherein the top-gas discharge duct (5) runs into a CO₂ purification means (15), from which there depart a reducing-gas supply duct (16) conducting the CO₂-purified top gas to a reduction shaft furnace (17) via a heating means (18, 20) for the CO₂-purified top gas as well as an offgas duct (23, 29, 29') conducting separated CO₂-containing offgas, characterized in that the offgas duct (23, 29, 29') leading to a heating means (18, 31) is entered by a duct (19, 19') conducting an oxygen-containing gas to the heating means (18, 31), with the heating means (18) being designed as an indirect heating means (18) for heating CO₂-purified top gas and the reducing-gas supply duct (16) conducting this top gas running into the heating means (18).

10. A plant according to claim 9, characterized in that an offgas duct (23) departs from the CO₂ purification means (15), conducting separated CO₂-containing offgas at least partially to a heating means (18), a combustion-gas duct (22) conducting a combustible gas to the heating means (18) running into the offgas duct.

11. A plant according to claim 10, characterized in that the combustion-gas duct (22) departs from a reduction shaft furnace (17), at least partially receiving the top gas incurring in the reduction shaft furnace (17).

12. A plant according to one or several of claims 9 to 11, characterized in that two reduction shaft furnaces (1, 17) are provided, which are flow-connected via the top-gas discharge duct (5) of the first reduction shaft furnace (1), via the CO₂ purification means (15) and via the reducing-gas supply duct (16) departing therefrom and leading through the heating means (18).

13. A plant according to claim 12, characterized in that the combustion-gas duct (22) departs from the second reduction shaft furnace (17).

14. A plant according to claim 13, characterized by a melter gasifier (7), into which a conveying duct (6) conveying the sponge iron from the first reduction shaft furnace runs and which comprises supply ducts (8, 9) for oxygen-containing gases and for solid carbon carriers as well as taps (11, 12) for pig iron and slag and from which a supply duct (3) for reducing gas formed in the melter gasifier (7) departs, running into the first reduction shaft furnace (1).

15. A plant according to one or several of claims 9 to 14, characterized in that the gas purification means (15) is designed as a pressure swing adsorption plant.

16. A plant according to one or several of claims 9 to 15, characterized in that an offgas duct (29, 29') carrying off separated CO₂-containing offgas runs into a heating means (31) designed as a steam generator (Fig. 2).

17. A plant according to one or several of claims 9 to 16, characterized in that an offgas duct (29, 29') carrying off separated CO₂-containing offgas runs into a heating means (31') the smoke gases of which may be carried off via a smoke-gas discharge duct (35) comprising a heat exchanger (34), wherein material to be heated, such as coal, ore, etc., may be directly contacted with the smoke gas in the heat exchanger (34) (Fig. 3).

18. A plant according to one or several of claims 9 to 17, characterized in that an offgas duct (29) carrying off separated CO₂-containing offgas is conducted via a heat exchanger (30) provided in the top-gas discharge duct of a reduction shaft furnace (17) and subsequently runs into a heating means (31) (Figs. 2, 3).

## Revendications

1. Procédé de production de mousse de fer à partir d'un matériau en particules contenant de l'oxyde de fer, dans lequel le matériau contenant l'oxyde de fer est réduit en mousse de fer dans une zone de réduction (4) avec un gaz réducteur, et le gaz qui se développe pendant la réduction est extrait sous forme de gaz de tête et soumis à une épuration du CO₂ avec séparation du gaz d'échappement contenant du CO₂, caractérisé en ce que le gaz d'échappement est mélangé avec un gaz contenant de l'oxygène et en ce que le gaz d'échappement est brûlé du moins en partie avec transmission de chaleur indirecte au gaz réducteur.

2. Procédé selon la revendication 1, caractérisé en ce que l'on réduit du matériau contenant de l'oxyde de fer en forme de particules avec le gaz réducteur réchauffé.

3. Procédé selon l'une ou l'autre des revendication 1 et 2, caractérisé en ce que le gaz d'échappement contenant du CO₂ et séparé lors de l'épuration du CO₂ est mélangé en supplément avec un gaz combustible.

4. Procédé selon l'une ou plusieurs des revendications 1 à 3, caractérisé en ce que l'on utilise en tant que gaz combustible du moins une partie d'un gaz de tête qui se produit lors d'une réduction, par exemple une réduction directe, d'un matériau contenant de l'oxyde de fer et en forme de particules, avec un gaz réducteur.

5. Procédé selon l'une ou plusieurs des revendications 2 à 4, caractérisé en ce que le gaz de tête soumis à une épuration du CO₂ est formé dans une première zone de réduction (4) et le gaz de tête épuré du CO₂ est utilisé en tant que gaz réducteur après un réchauffement dans au moins une autre zone de réduction (27) pour la réduction d'un autre matériau contenant de l'oxyde de fer et en forme de particules, et en ce qu'il y est transformé.

6. Procédé selon la revendication 5, caractérisé en ce que le gaz de tête formé dans la seconde zone de réduction (27) est mélangé du moins en partie en tant que gaz combustible avec le gaz d'échappement contenant du CO₂ séparé lors de l'épuration du CO₂, et en ce qu'il est brûlé avec transmission de chaleur indirecte au gaz réducteur amené à la seconde zone de réduction (27).

7. Procédé selon l'une ou plusieurs des revendications 1 à 6, caractérisé en ce que l'épuration du CO₂ du gaz de tête est effectuée par adsorption sous changement de pression.

8. Procédé selon l'une ou plusieurs des revendications 5 à 7, caractérisé en ce que la mousse de fer formée dans la première zone de réduction (4) est fondue dans une zone de gazéification-fusion (10) sous addition de matières solides contenant du carbone et de gaz contenant de l'oxygène, en formant un gaz réducteur contenant du CO et du H₂ qui est amené dans la première zone de réduction (4) et qui y est transformé.

9. Installation pour mettre en oeuvre le procédé selon l'une ou plusieurs des revendications 1 à 7, qui comporte un fourneau à cuve de réduction (1) destiné à la matière contenant de l'oxyde de fer et en forme de particules et pourvu d'une conduite d'amenée (3) pour un gaz réducteur ainsi que d'une conduite d'évacuation de gaz de tête (5), dans laquelle la conduite d'évacuation de gaz de tête (5) débouche dans un dispositif d'épuration de CO₂ (15) depuis lequel partent une conduite d'amenée de gaz réducteur (16) menant le gaz de tête épuré du CO₂ vers un fourneau à cuve de réduction (17) par l'intermédiaire d'un dispositif de chauffage (18, 20) pour le gaz de tête épuré du CO₂, ainsi qu'une conduite (23, 29, 29') menant le gaz d'échappement séparé contenant du CO₂, caractérisée en ce qu'une conduite (19, 19') menant un gaz contenant de l'oxygène vers un dispositif de chauffage (18, 31) débouche dans la conduite de gaz d'échappement (73, 29, 29') qui mène vers le dispositif de chauffage (18, 31), le dispositif de chauffage (18) étant réalisé sous forme d'un dispositif de chauffage indirect (18) pour réchauffer le gaz de tête épuré du CO₂, et en ce que la conduite d'amenée de gaz réducteur (16) menant ce gaz de tête débouche dans le dispositif de chauffage (18).

10. Installation selon la revendication 9, caractérisée en ce que depuis le dispositif d'épuration de CO₂ (15) part une conduite de gaz d'échappement (23) menant un gaz d'échappement séparé contenant du CO₂ du moins en partie jusqu'à un dispositif de chauffage (18), dans laquelle débouche une conduite de gaz combustible (22) menant un gaz combustible vers le dispositif de chauffage (18).

11. Installation selon la revendication 10, caractérisée en ce que la conduite de gaz combustible (22) part depuis un fourneau à cuve de réduction (17) et reçoit au moins en partie le gaz de tête qui se produit dans le fourneau à cuve de réduction (17).

12. Installation selon l'une ou plusieurs des revendications 9 à 11, caractérisée en ce qu'il est prévu deux fourneaux à cuve de réduction (1, 17) qui sont reliés l'un à l'autre via la conduite d'évacuation de gaz de tête (5) du premier fourneau à cuve de réduction (1), via le dispositif d'épuration de CO₂ (15) et via la conduite d'amenée de gaz réducteur (16) partant depuis celui-ci et passant par le dispositif de chauffage (18).

13. Installation selon la revendication 12, caractérisée en ce que la conduite de gaz combustible (22) part depuis le second fourneau à cuve de réduction (17).

14. Installation selon la revendication 13, caractérisée par un appareil de gazéification-fusion (7) dans lequel débouche une conduite de transport (6) menant la mousse de fer hors du premier fourneau à cuve de réduction, et qui comporte des conduites d'amenée (8, 9) pour les gaz contenant de l'oxygène et pour des matières solides contenant du carbone, ainsi que des prises de coulée (11, 12) pour la fonte de fer et les scories, et depuis lequel part une conduite d'amenée (3) pour le gaz réducteur formé dans l'appareil de gazéification-fusion (7) débouchant dans le premier fourneau à cuve de réduction (4).

15. Installation selon l'une ou plusieurs des revendications 9 à 14, caractérisée en ce que le dispositif d'épuration de gaz (15) est réalisé sous forme d'une installation d'absorption sous changement de pression.

16. Installation selon l'une ou plusieurs des revendications 9 à 15, caractérisée en ce qu'une conduite de gaz d'échappement (29, 29') évacuant le gaz d'échappement séparé contenant du CO₂ débouche dans un dispositif de chauffage (31) réalisé sous forme d'un générateur de vapeur (figure 2).

17. Installation selon l'une ou plusieurs des revendications 9 à 16, caractérisée en ce qu'une conduite de gaz d'échappement (29, 29') évacuant le gaz d'échappement séparé contenant du CO₂ débouche dans un dispositif de chauffage (31') dont les gaz de fumée sont susceptibles d'être évacués via une conduite d'évacuation de gaz de fumée (35) comportant un échangeur de chaleur (34), la matière à réchauffer, comme le carbone, le minerai, etc., pouvant être amenée en contact direct avec le gaz de fumée dans l'échangeur de chaleur (34) (figure 3).

18. Installation selon l'une ou plusieurs des revendications 9 à 17, caractérisée en ce qu'une conduite de gaz d'échappement (29) évacuant le gaz d'échappement séparé contenant du CO₂ est guidée via un échangeur de chaleur (30) prévu dans la conduite d'évacuation de gaz de tête d'un fourneau à cuve de réduction (17) et débouche ensuite dans un dispositif de chauffage (31) (figures 2, 3).
